# EUROPÄISCHE PATENTANMELDUNG

(11) **EP 4 841 384 A1**
(43) Veröffentlichungstag der Anmeldung: **18.11.2026**
(21) Anmeldenummer: 26175544.1
(22) Anmeldetag: 29.04.2026
(51) Int. Cl.: G05G 5/03, F16H 59/10, F16H 61/24, F16H 59/02, F16H 61/22

(54) **HANDBETÄTIGUNGSAKTUATOR UND VERFAHREN ZUR STEUERUNG EINES HANDBETÄTIGUNGSAKTUATORS**

(30) Priorität: 12.05.2025 DE 102025118167
(71) Anmelder: Dr. Ing. h.c. F. Porsche Aktiengesellschaft, 70435 Stuttgart (DE)
(72) Erfinder: Kühner, Manuel, 36100 Petersberg (Marbach) (DE); Stocks, Julian Philip, 70178 Stuttgart (DE); Reichert, Andreas, 71229 Leonberg (DE); Lipphardt, Simon, 71088 Holzgerlingen (DE)

(57) **Zusammenfassung**

Die Erfindung betrifft einen Handbetätigungsaktuator (1), insbesondere für die emulierte Betätigung eines Getriebes, insbesondere eines Kraftfahrzeugs, mit einem Aktuatorgehäuse (2) und mit einem Betätigungshebel (3), wobei der Betätigungshebel (3) in dem Aktuatorgehäuse (2) entlang zumindest eines Betätigungswegs verschwenkbar gelagert angeordnet ist, wobei zumindest ein steuerbarer erster Aktuator (10) vorgesehen ist, welcher eine Kraftwirkung auf den Betätigungshebel (3) ausübt, um die auf den Betätigungshebel (3) wirkenden Widerstandskräfte bei der Betätigung des Betätigungshebels (3) zu beeinflussen, um die Betätigungshaptik des Betätigungshebels (3) zu beeinflussen, wobei zumindest ein steuerbarer zweiter Aktuator (40) vorgesehen ist, welcher eine Kraftwirkung auf den Betätigungshebel (3) ausübt, um die auf den Betätigungshebel (3) wirkenden Widerstandskräfte bei der Betätigung des Betätigungshebels (3) zu beeinflussen, um die Betätigungshaptik des Betätigungshebels (3) zu beeinflussen, wobei der zweite Aktuator (40) von einem anderen Typ ist als der erste Aktuator (10).

## Beschreibung

Die Erfindung betrifft einen Handbetätigungsaktuator und ein Verfahren zur Steuerung eines Handbetätigungsaktuators, insbesondere eines Kraftfahrzeugs.

Kraftfahrzeuge des Standes der Technik weisen oftmals beispielsweise einen Schalthebel für das Schalten eines manuellen Schaltgetriebes oder einen Wählhebel für das Bedienen eines automatischen Getriebes auf. Dabei ist der Schalthebel mechanisch mit dem manuellen Schaltgetriebe gekoppelt, um die Gänge des manuellen Schaltgetriebes zu Schalten. Auch weist ein solches Kraftfahrzeug eine Kupplung im Antriebsstrang und ein Kupplungspedal zur Betätigung der Kupplung auf. Ein Kraftfahrzeug gemäß dem Stand der Technik mit einem automatischen Getriebe weist im Vergleich hierzu keine vom Fahrer zu betätigende Kupplung und entsprechend auch kein Kupplungspedal auf. Der Wählhebel ist mechanisch mit dem automatischen Getriebe gekoppelt.

Derartige Schalthebel und auch derartige Wählhebel werden in modernen Kraftfahrzeugen typischerweise immer mehr eingespart und durch Betätigungstasten ersetzt, was Kosten einspart und eine automatisierte elektronisch gesteuerte Betätigung des automatischen Getriebes erlaubt. Die vollautomatische Steuerung von Kraftfahrzeugen wird jedoch nicht von jedem Fahrer gewünscht, weil damit auch ein individueller Eingriff durch den Fahrer erschwert oder vermieden wird, was jedoch von manchen Fahrern nach wie vor bevorzugt wird.

Es besteht entsprechend der Wunsch nach einer Remanualisierung von Kraftfahrzeugen, um gewisse Funktionalitäten wieder manuell durchführen zu können, wie beispielsweise die manuelle Betätigung des automatischen Getriebes als manuelles Schaltgetriebe und/oder die sequentielle Schaltung des automatischen Getriebes, wobei das Kraftfahrzeug durchaus auch nur einen Elektromotor als Antriebsmotor aufweisen kann, wobei die Schaltung des manuellen Getriebes oder eines automatischen Getriebes simuliert wird.

Dazu ist es allerdings notwendig, dass ein Handbetätigungsaktuator vorgesehen und verwendbar ist, welcher mit einem Betätigungshebel ausgestattet ist, mit welchem in einem ersten Modus die jeweilige manuelle Betätigung eines manuell schaltbaren Getriebes und/oder in einem zweiten Modus die sequentielle Schaltung eines automatischen Getriebes simuliert durchführbar ist, so dass der Handbetätigungsaktuator sowohl für das Schalten eines automatischen Getriebes als auch für das Schalten eines automatischen Getriebes in der Art eines manuellen Getriebes geeignet ist oder dieses emulieren kann. Der Fahrer soll also die Auswahl haben, ob er das Fahrzeug fährt und dabei das vorhandene Getriebe oder bei einem Elektrofahrzeug einen vorhandenen Elektromotor so schaltet, als ob ein manuelles Getriebe oder ein automatisches Getriebe vorgesehen wäre. Dabei kann auch ein elektronisch steuerbares Kupplungspedal vorgesehen sein, um die Kupplungsbetätigung bei einem emulierten manuellen Schaltgetriebe zu emulieren.

Dabei ist es aber auch wünschenswert, wenn der Handbetätigungsaktuator geeignet steuerbar ist, um dem Bediener oder dem Fahrer des Kraftfahrzeugs ein realistisches Erlebnis des Schaltens eines manuellen Schaltgetriebes oder eines automatischen Getriebes zu geben. Dazu gehört auch, dass der Betätigungshebel derart verlagerbar steuerbar ist, dass der Fahrer des Kraftfahrzeugs bei einem Versuch des Betätigens des Betätigungshebels durch Kraftbeaufschlagung bei hoher Fahrzeuggeschwindigkeit und einem Schaltversuch in eine unangemessene Gangposition ein Sperren des Betätigungshebels unter Last und bei einer Reduzierung der Fahrzeuggeschwindigkeit oder der Motordrehzahl ein Freigeben der Betätigung unter Last erfährt. Der Fahrer kann also den Betätigungshebel auch unter Anwendung einer sehr hohen Betätigungskraft nicht in die unangemessene Gangposition einlegen, weil diese Betätigung unter Last gesperrt ist. Reduziert sich die Fahrzeuggeschwindigkeit und/oder die Motordrehzahl und der einzulegende Gang wird damit zulässig, so kann bei weiter vorliegender Kraftbeaufschlagung der Betätigungshebel in die nun zulässige Gangposition eingelegt werden, es erfolgt ein Freigeben unter Last.

Es ist die Aufgabe, einen Handbetätigungsaktuator zu schaffen, welcher mit einem Betätigungshebel ausgestattet ist und realistisch betätigbar ist zur Erzeugung eines realistischen Schalterlebnisses. Auch ist es die Aufgabe, ein verbessertes Verfahren zur Steuerung eines Handbetätigungsaktuators zu schaffen, welches ein realistisches Schalterlebnis erlaubt.

Die Aufgabe zu dem Betätigungsaktuator wird mit den Merkmalen von Anspruch 1 gelöst.

Ein Ausführungsbeispiel der Erfindung betrifft einen Handbetätigungsaktuator, insbesondere für die emulierte Betätigung eines Getriebes, insbesondere eines Kraftfahrzeugs, mit einem Aktuatorgehäuse und mit einem Betätigungshebel, wobei der Betätigungshebel in dem Aktuatorgehäuse entlang zumindest eines Betätigungswegs verschwenkbar gelagert angeordnet ist, wobei zumindest ein steuerbarer erster Aktuator vorgesehen ist, welcher eine Kraftwirkung auf den Betätigungshebel ausübt, um die auf den Betätigungshebel wirkenden Widerstandskräfte bei der Betätigung des Betätigungshebels zu beeinflussen, um die Betätigungshaptik des Betätigungshebels zu beeinflussen, wobei zumindest ein steuerbarer zweiter Aktuator vorgesehen ist, welcher eine Kraftwirkung auf den Betätigungshebel ausübt, um die auf den Betätigungshebel wirkenden Widerstandskräfte bei der Betätigung des Betätigungshebels zu beeinflussen, um die Betätigungshaptik des Betätigungshebels zu beeinflussen, wobei der zweite Aktuator von einem anderen Typ ist als der erste Aktuator. Dabei dient der zumindest eine erste Aktuator der üblichen Gestaltung der Widerstandskräfte, um die Betätigung des Betätigungshebels für den Fahrer typisch für einen Schalthebel eines Kraftfahrzeugs mit manuell schaltbarem Getriebe zu gestalten und der zumindest eine zweite Aktuator dient dem Sperren unter Last und Freigeben unter Last, wenn höhere Kräfte auf den Betätigungshebel wirken, die aber nicht dazu führen sollen, den Betätigungshebel in einer Gangposition schalten zu können, die situationsbedingt nicht zulässig ist. Die unterschiedlichen Aktuatoren haben dabei die Fähigkeit, unterschiedlich große Kräfte aufzubringen, um ihre jeweilige Aufgabe zu erfüllen.

Besonders vorteilhaft ist es, wenn der zumindest eine erste Aktuator ein magnetorheologischer Aktuator ist, wobei zumindest eine Magnetspule oder ein Elektromagnet vorgesehen ist, um ein Magnetfeld zu erzeugen, welches auf den magnetorheologischen Aktuator einwirkt und/oder dass der zumindest eine erste Aktuator ein elektromotorischer Aktuator ist. Damit ist ein schnell steuerbarer Aktuator verfügbar, der zur Gestaltung einer Kraftwirkung auf den Betätigungshebel vorgesehen ist, um die auf den Betätigungshebel wirkenden Widerstandskräfte bei der Betätigung des Betätigungshebels zu beeinflussen, um die Betätigungshaptik des Betätigungshebels zu beeinflussen.

Vorteilhaft ist es, wenn der zumindest eine zweite Aktuator ein druckmittelbetätigbarer Aktuator ist. Damit ist ein schnell steuerbarer Aktuator verfügbar, der auch sehr hohe Kräfte übertragen kann, zur Gestaltung einer Kraftwirkung auf den Betätigungshebel, um ein Sperren unter Last und ein Freigeben unter Last steuerbar realisieren zu können. Dabei sind druckmittelbetätigbare Aktuatoren sehr gut geeignet, weil sie auch sehr hohe Kräfte übertragen können, was dazu führt, dass sie auch eine fahrerseitig aufgebrachte starke Betätigungskraft blockieren können, falls dies notwendig sein sollte.

Besonders vorteilhaft ist es, wenn der zumindest eine zweite Aktuator einen Hubmagneten aufweist. Bei dem Hubmagneten kann es sich um einen Hubmagneten handeln, der mit dem Betätigungshebel koppelbar ist. Die Kopplung kann insbesondere mechanisch stattfinden.

Alternativ ist es besonders vorteilhaft, wenn der zumindest eine zweite Aktuator eine Magnetspule aufweist. Dabei ist es möglich, dass der Aktuator mittels der Magnetspule im aktivierten Zustand der Magnetspule eine magnetische Kraft auf den Betätigungshebel ausüben kann. Ein aktivierter Zustand der Magnetspule kann beispielsweise durch Anlegen einer Spannung erfolgen. Demzufolge ist die Magnetspule im aktivierten Zustand bestromt.

Besonders vorteilhaft ist es, wenn der druckmittelbetätigbare Aktuator eine erste Kolben-Zylindereinheit aufweist, die eine erste Kraft auf den Betätigungshebel ausübt und eine zweite Kolben-Zylindereinheit aufweist, die eine zweite Kraft auf den Betätigungshebel ausübt, wobei die zweite Kraft der ersten Kraft entgegenwirkt. So können die hohen Kräfte in beiden Richtungen aufgebracht werden, in welchen die Kolben-Zylindereinheiten in Bezug auf die Betätigungsrichtung des Betätigungshebels wirken.

Auch ist es vorteilhaft, wenn der Betätigungshebel ein erstes Hebelelement aufweist, an welchem der verlagerbare Kolben der ersten Kolben-Zylindereinheit angreift und der Betätigungshebel ein zweites Hebelelement aufweist, an welchem der verlagerbare Kolben der zweiten Kolben-Zylindereinheit angreift. Damit können auch hohe Kräfte auf den Betätigungshebel übertragen werden, um diesen zu sperren oder freizugeben. Dabei bilden das erste Hebelelement und das zweite Hebelelement eine Wippe aus, wobei die Kolben der Kolben-Zylindereinheiten damit an der Wippe gegenüberliegend angreifen, um die Betätigung des Betätigungshebels unter Last freizugeben oder unter Last zu sperren. Der zweite Aktuator, als ein druckmittelbetätigbarer Aktuator, bildet eine Wippe aus, um die gesteuerte Betätigung des Betätigungshebels unter Last freizugeben oder unter Last zu sperren.

Auch ist es vorteilhaft, wenn die erste Kolben-Zylindereinheit mit der zweiten Kolben-Zylindereinheit mittels einer Fluidverbindungsleitung fluidverbunden ist, wobei in der Fluidverbindungsleitung ein steuerbares Ventil und/oder ein Druckmittelreservoir und/oder ein Druckmittelausgleichsbehälter angeordnet ist. Damit kann eine sehr effektive und schnelle Steuerung der beiden Kolben-Zylindereinheiten vorgenommen werden, um eine Betätigung des Betätigungshebels in die eine oder in die andere Betätigungsrichtung oder in beide Betätigungsrichtungen zu blockieren.

Die Aufgabe zu dem Verfahren wird mit den Merkmalen von Anspruch 7 gelöst.

Ein Ausführungsbeispiel der Erfindung betrifft ein Verfahren zur Steuerung eines Handbetätigungsaktuators, insbesondere für die emulierte Betätigung eines Getriebes, insbesondere eines Kraftfahrzeugs, mit einem Aktuatorgehäuse und mit einem Betätigungshebel, wobei der Betätigungshebel in dem Aktuatorgehäuse entlang zumindest eines Betätigungswegs verschwenkbar gelagert angeordnet ist, wobei zumindest ein steuerbarer erster Aktuator vorgesehen ist, welcher eine Kraftwirkung auf den Betätigungshebel ausübt, um die auf den Betätigungshebel wirkenden Widerstandskräfte bei der Betätigung des Betätigungshebels zu beeinflussen, um die Betätigungshaptik des Betätigungshebels zu beeinflussen, wobei zumindest ein steuerbarer zweiter Aktuator vorgesehen ist, welcher eine Kraftwirkung auf den Betätigungshebel ausübt, um die auf den Betätigungshebel wirkenden Widerstandskräfte bei der Betätigung des Betätigungshebels zu beeinflussen, um die Betätigungshaptik des Betätigungshebels zu beeinflussen, wobei der zweite Aktuator von einem anderen Typ ist als der erste Aktuator. Damit können Aktuatoren verwendet werden, die ihrem Einsatzzweck angepasst sind, was die Ausgestaltung effektiv und kostengünstig macht und es dem Fahrer erlaubt, eine realistische Betätigungshaptik zu erzeugen.

Auch ist es zweckmäßig, wenn der zumindest eine zweite Aktuator ein druckmittelbetätigbarer Aktuator ist, welcher eine erste Kolben-Zylindereinheit aufweist, die eine erste Kraft auf den Betätigungshebel ausübt und eine zweite Kolben-Zylindereinheit aufweist, die eine zweite Kraft auf den Betätigungshebel ausübt, wobei die zweite Kraft der ersten Kraft entgegenwirkt, wobei der Betätigungshebel ein erstes Hebelelement aufweist, an welchem der verlagerbare Kolben der ersten Kolben-Zylindereinheit angreift und der Betätigungshebel ein zweites Hebelelement aufweist, an welchem der verlagerbare Kolben der zweiten Kolben-Zylindereinheit angreift, wobei die Steuerung des zweiten Aktuators derart erfolgt, dass der Betätigungshebel in seiner Verlagerbarkeit definiert sperrbar oder freigebbar ist, so dass eine fahrerseitige Betätigung des Betätigungshebels unter Last sperrbar oder freigebbar ist. Damit wird es ermöglicht, dem Fahrer eine realistische Betätigungshaptik zu erzeugen.

Auch ist es vorteilhaft, wenn die Einwirkung des verlagerbaren Kolbens der ersten Kolben-Zylindereinheit und die Einwirkung des verlagerbaren Kolbens der zweiten Kolben-Zylindereinheit auf den Betätigungshebel mittels eines steuerbaren Ventils ansteuerbar ist. Das steuerbare Ventil erlaubt die Steuerung der Durchströmung der Fluidverbindungsleitung zwischen den Kolben-Zylindereinheiten, was die Steuerung der Kräfte auf den Betätigungshebel bewirkt.

Auch ist es zweckmäßig, wenn das steuerbare Ventil in der Fluidverbindungsleitung zwischen der ersten Kolben-Zylindereinheit und der zweiten Kolben-Zylindereinheit angeordnet ist und derart ansteuerbar ist, dass es einen Fluidstrom zwischen der ersten Kolben-Zylindereinheit und der zweiten Kolben-Zylindereinheit sperrt oder einen Fluidstrom von der ersten Kolben-Zylindereinheit zu der zweiten Kolben-Zylindereinheit zulässt oder einen Fluidstrom von der zweiten Kolben-Zylindereinheit zu der ersten Kolben-Zylindereinheit zulässt. Dadurch wird die Steuerung der Kräfte auf den Betätigungshebel bewirkt.

Im Folgenden wird die Erfindung anhand von Ausführungsbeispielen unter Bezugnahme auf die Zeichnungen detailliert erläutert. In den Zeichnungen zeigt:
- Fig. 1: eine schematische Darstellung eines Ausführungsbeispiels eines Handbetätigungsaktuators mit einem Betätigungshebel eines Kraftfahrzeugs zur Erläuterung der Erfindung,
- Fig. 2: eine schematische Darstellung eines weiteren Ausführungsbeispiels eines Handbetätigungsaktuators mit einem Betätigungshebel zur Erläuterung der Erfindung,
- Fig. 3: eine schematische Darstellung eines weiteren Ausführungsbeispiels eines Handbetätigungsaktuators mit einem Betätigungshebel zur Erläuterung der Erfindung, und
- Fig. 4: eine schematische Darstellung eines Details des Ausführungsbeispiels eines Handbetätigungsaktuators mit einem Betätigungshebel nach Figur 3.

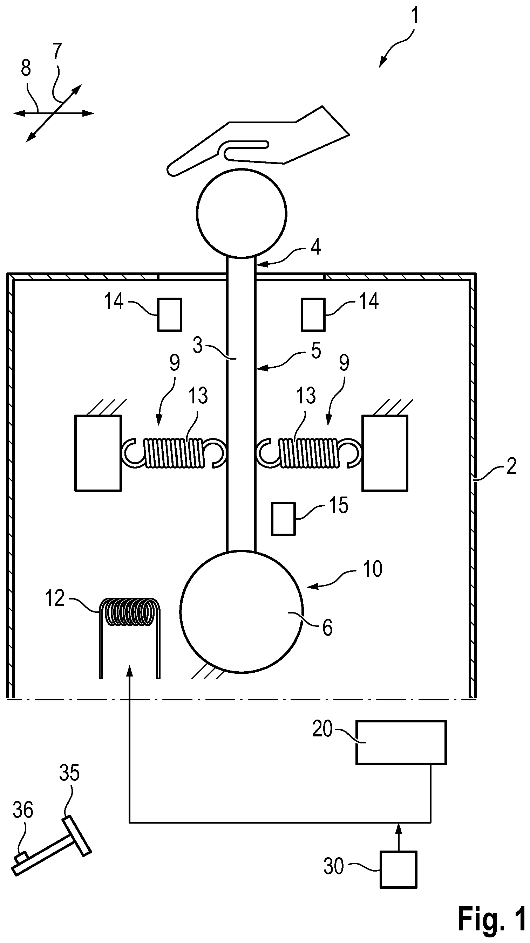

Die Figur 1 zeigt in einer schematischen Darstellung ein Ausführungsbeispiel eines Handbetätigungsaktuators 1 eines Kraftfahrzeugs. Der Handbetätigungsaktuator 1 dient der Emulation eines Schaltens eines Getriebes, wobei keine mechanische Verbindung zwischen dem Betätigungshebel 3 und einem Getriebe oder einem Elektromotor vorgesehen ist, so dass das Schalten eines manuellen Schaltgetriebes oder eines automatischen Getriebes in einem Fahrzeug mit automatischem Getriebe oder Elektromotor vorgenommen oder emuliert werden kann. Dazu kann auch ein elektronisch gesteuertes Kupplungspedal 35 vorgesehen sein, welches beim Schalten des manuellen Schaltgetriebes zu betätigen wäre.

Der Handbetätigungsaktuator 1 weist ein Aktuatorgehäuse 2 und einen Betätigungshebel 3 auf, der in dem Aktuatorgehäuse 2 verlagerbar gelagert angeordnet ist.

Der Betätigungshebel 3 weist typischerweise einen ersten Hebelarmbereich 4 und einen zweiten Hebelarmbereich 5 auf. Der Betätigungshebel 3 ist in dem Aktuatorgehäuse 2 derart verschwenkbar mittels eines Lagers 6 gelagert angeordnet, dass der erste Hebelarmbereich 4 von dem Aktuatorgehäuse 2 nach außen, typischerweise nach oben, abragt und der zweite Hebelarmbereich 5 in das Aktuatorgehäuse 2 hineinragt.

Bei einer Verlagerung des Betätigungshebels 3 kann der Betätigungshebel 3 im Aktuatorgehäuse 2 lateral gemäß einer zweiten Betätigungsrichtung 7 als auch transversal gemäß einer ersten Betätigungsrichtung 8 verlagert werden.

Gemäß dem gezeigten Ausführungsbeispiel des Handbetätigungsaktuators 1 in Figur 1 ist zumindest eine erste Federanordnung 9 vorgesehen oder es sind mehrere Federanordnungen 9 vorgesehen, welche mit dem Betätigungshebel 3 zusammenwirkt oder zusammenwirken. Dabei ist die jeweilige Federanordnung 9 beispielsweise sowohl an dem Aktuatorgehäuse 2 als auch an dem Betätigungshebel 3 angelenkt, um in Zug- und/oder in Druckrichtung eine Kraft auf den Betätigungshebel 3 zu übertragen, so dass in der Ruhelage oder Mittellage eine erste stabile Ruhelage vorgesehen ist. Dadurch ist der Betätigungshebel 3 mittels der zumindest einen Federanordnung 9 bezüglich einer ersten stabilen Ruhelage gelagert angeordnet.

Die Zugrichtung beispielsweise ist eine Richtung, in welcher die jeweilige Federanordnung 9 eine Zugkraft auf den Betätigungshebel 3 ausübt und die Druckrichtung ist eine Richtung, in welcher die Federanordnung 9 eine Druckkraft auf den Betätigungshebel 3 ausübt. Bei zwei sich gegenüberliegenden Federanordnungen 9, wie in Figur 1 gezeigt, sind die Zug- und Druckrichtungen der jeweiligen Federanordnung 9 jeweils vertauscht.

Gemäß der gezeigten Ausführungsvariante weist die Federanordnung 9 zumindest ein Federelement 13 auf, welches sowohl am Betätigungshebel 3 als auch am Aktuatorgehäuse 2 angelenkt ist, so dass der Betätigungshebel 3 entgegen einer Rückstellkraft des Federelements 13 verlagerbar angeordnet ist, insbesondere die Federanordnung 9 zumindest zwei Federelemente 13 aufweist, welche sowohl am Betätigungshebel 3 als auch am Aktuatorgehäuse 2 angelenkt sind, so dass der Betätigungshebel 3 entgegen einer Rückstellkraft zumindest eines Federelements 13 verlagerbar angeordnet ist.

Weiterhin ist zumindest ein steuerbarer erster Aktuator 10 angeordnet, welcher auf den Betätigungshebel 3 einwirkt. Bevorzugt sind mehrere solcher ersten Aktuatoren 10 vorgesehen.

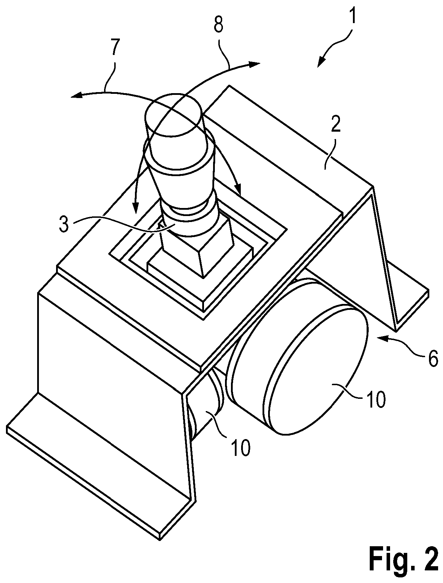

Die Figur 2 zeigt ein Ausführungsbeispiel, bei welchem zwei solcher erster Aktuatoren 10 erkennbar sind. Jeder der beiden Aktuatoren 10 wirkt in eine der beiden Betätigungsrichtungen 8, 7 des Betätigungshebels 3.

Der Betätigungshebel 3 kann in dem Aktuatorgehäuse 2 in zumindest einer Gasse oder in mehreren Gassen in der ersten transversalen Betätigungsrichtung 8 verlagerbar sein und quer zu der Gasse oder zu den Gassen in der zweiten lateralen Betätigungsrichtung 7 verlagerbar gelagert sein. Bevorzugt ist zumindest eine stabile Ruhelage in einer ersten Gasse positioniert.

Gemäß dem gezeigten Ausführungsbeispiel ist der Betätigungshebel 3 in einem Lager 6 um zumindest eine Achse verschwenkbar gelagert angeordnet und der zumindest eine erste Aktuator 10 bildet das Lager 6 oder er ist ein Teil des Lagers 6.

In einem bevorzugten Ausführungsbeispiel ist der zumindest eine erste Aktuator 10 ein magnetorheologischer Aktuator 10 oder er weist einen solchen magnetorheologischen Aktuator 10 auf. Gemäß dem gezeigten Ausführungsbeispiel weist der erste Aktuator 10 zumindest eine Magnetspule 12 oder einen Elektromagnet auf. Damit wird der zumindest eine magnetorheologische Aktuator 10 geschaltet bzw. gesteuert.

Alternativ kann der zumindest eine erste Aktuator 10 auch beispielsweise ein elektromotorischer Aktuator 10 sein.

Der Betätigungshebel 3 ist in dem Aktuatorgehäuse 2 entlang zumindest eines Betätigungswegs verschwenkbar gelagert angeordnet, wobei der jeweilige Betätigungsweg an seinen Enden jeweils Endanschläge 14 vorsieht, an welche der Betätigungshebel 3 zur Anlage kommen kann, wenn er so weit verschwenkt wird. Dabei wirken allerdings die Federelemente 13 und auch der zumindest eine erste Aktuator 10 der Verlagerung des Betätigungshebels 3 hin zu den Endanschlägen 14 entgegen.

Entsprechend ist der zumindest eine steuerbare erste Aktuator 10 vorgesehen, welcher eine Kraftwirkung auf den Betätigungshebel 3 ausübt, um die auf den Betätigungshebel 3 wirkenden Widerstandskräfte bei der Betätigung des Betätigungshebels 3 zu beeinflussen, um die Betätigungshaptik des Betätigungshebels 3 zu beeinflussen.

Der zumindest eine erste Aktuator 10 ist beispielsweise als magnetorheologischer Aktuator 10 ein erster Aktuator 10, welcher die Betätigung des Betätigungshebels 3 bremst oder blockiert, wobei das Maß der wirkenden Kraft gesteuert werden kann. Ein magnetorheologischer Aktuator 10 ist daher geeignet, die Betätigungshaptik des Betätigungshebels 3 zu beeinflussen.

Im gezeigten Ausführungsbeispiel ist der Betätigungshebel 3 mittels zumindest einer Federanordnung 9 mit Federelementen 13 hinsichtlich beispielsweise einer Ruhelage monostabil gelagert angeordnet. Auch kann der Betätigungshebel 3 multistabil angeordnet sein.

Weiterhin ist zumindest ein Sensor 15 vorgesehen, mittels welchem die Position des Betätigungshebels 3 überwacht wird. Auch kann mittels des Sensors 15 die auf den Betätigungshebel 3 wirkende Betätigungskraft und/oder die Beschleunigung des Betätigungshebels 3 überwacht werden. Dies deutet darauf hin, wie der Fahrer den Betätigungshebel 3 bewegt, mit welcher Kraft und/oder mit welcher Geschwindigkeit.

Weiterhin ist ein Stromregelkreis 20 zur Versorgung des zumindest einen ersten Aktuators 10 und/oder der zumindest einen Magnetspule 12 oder dem zumindest einen Elektromagneten vorgesehen.

Auch kann ein Sensor 36 vorgesehen sein, um zu überwachen, ob das Kupplungspedal 35 betätigt wird, was die Steuereinheit 30 bei der Steuerung der ersten Aktuatoren 10 berücksichtigen kann.

Der erfindungsgemäße Handbetätigungsaktuator 1 ist mit einem Betätigungshebel 3 ausgebildet, wobei der Betätigungshebel 3 in dem Aktuatorgehäuse 2 entlang zumindest eines Betätigungswegs oder bevorzugt entlang zweier Betätigungswege verlagerbar gelagert ist. Dabei sind die Betätigungswege entlang der beiden Betätigungsrichtungen 7, 8 vorgesehen.

Es ist zumindest ein erster steuerbarer Aktuator 10 vorgesehen oder es sind zwei oder mehr erste Aktuatoren 10 vorgesehen, wie dies oben beschrieben ist. Der jeweilige steuerbare erste Aktuator 10 ist vorgesehen, eine Kraftwirkung auf den Betätigungshebel 3 auszuüben, um die auf den Betätigungshebel 3 wirkenden Widerstandskräfte bei der Betätigung des Betätigungshebels 3 zu beeinflussen, um die Betätigungshaptik des Betätigungshebels 3 zu beeinflussen.

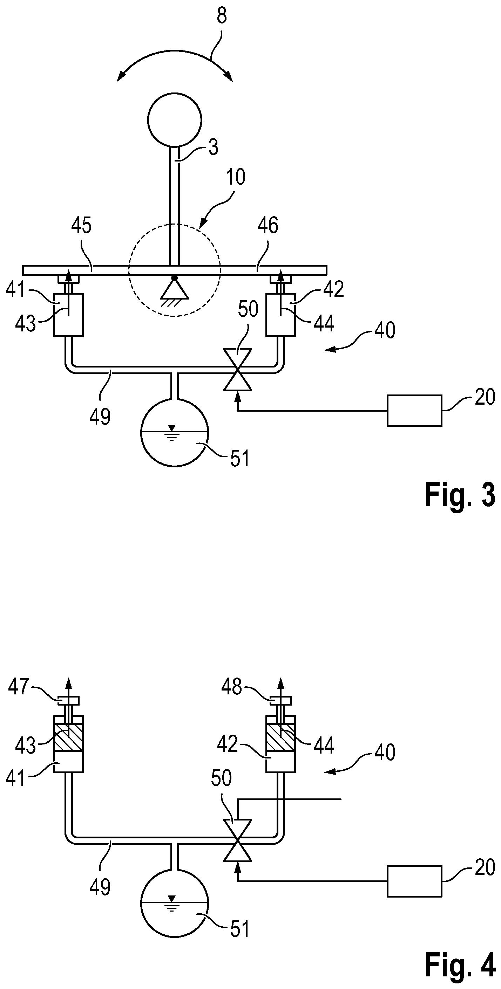

Weiterhin ist zumindest ein steuerbarer zweiter Aktuator 40 vorgesehen, wie es in der Figur 3 und in der Figur 4 gezeigt ist.

Der zweite Aktuator 40 ist vorgesehen, um eine Kraftwirkung auf den Betätigungshebel 3 auszuüben, um die auf den Betätigungshebel 3 wirkenden Widerstandskräfte bei der Betätigung des Betätigungshebels 3 zu beeinflussen, um die Betätigungshaptik des Betätigungshebels 3 zu beeinflussen, wobei der zweite Aktuator 40 von einem anderen Typ ist als der erste Aktuator 10. Der zweite Aktuator 40 ist in der Lage, schnell deutlich höhere Kräfte zu erzeugen und auf den Betätigungshebel 3 zu übertragen, um die Betätigung des Betätigungshebels 3 auch unter Last zu sperren oder unter Last freizugeben.

Aus den Figuren 3 und 4 ist erkennbar, dass der zumindest eine zweite Aktuator 40 ein druckmittelbetätigbarer Aktuator 40 ist. Der druckmittelbetätigbare Aktuator 40 weist eine erste Kolben-Zylindereinheit 41 auf, die eine erste Kraft 43 auf den Betätigungshebel 3 ausübt und der druckmittelbetätigbare Aktuator 40 weist eine zweite Kolben-Zylindereinheit 42 auf, die eine zweite Kraft 44 auf den Betätigungshebel 3 ausübt, wobei die zweite Kraft 44 der ersten Kraft 43 entgegenwirkt.

Dabei kann der Betätigungshebel 3 ein erstes Hebelelement 45 aufweisen, an welchem der verlagerbare Kolben 47 der ersten Kolben-Zylindereinheit 41 angreift. Auch kann der Betätigungshebel 3 ein zweites Hebelelement 46 aufweisen, an welchem der verlagerbare Kolben 48 der zweiten Kolben-Zylindereinheit 42 angreift. So kann über den druckmittelbetätigbaren Aktuator 40 auch eine größere Kraft auf den Betätigungshebel 3 übertragen werden, um eine beispielsweise Betätigung des Betätigungshebels 3 durch den Fahrer in spezifischen Betriebssituationen auch unter Last zu sperren oder auch unter Last freizugeben.

In diesem Ausführungsbeispiel bilden das erste Hebelelement 45 und das zweite Hebelelement 46 eine Wippe aus, wobei die Kolben der Kolben-Zylindereinheiten 41, 42 damit an der Wippe gegenüberliegend angreifen, um die Betätigung des Betätigungshebels 3 unter Last freizugeben oder unter Last zu sperren. Der zweite Aktuator 40, als ein druckmittelbetätigbarer Aktuator, bildet eine Wippe aus, um die gesteuerte Betätigung des Betätigungshebels 3 unter Last freizugeben oder unter Last zu sperren.

In den Figuren 3 und 4 ist weiterhin zu erkennen, dass die erste Kolben-Zylindereinheit 41 mit der zweiten Kolben-Zylindereinheit 42 mittels einer Fluidverbindungsleitung 49 fluidverbunden ist. So kann ein Fluidaustausch von der ersten Kolben-Zylindereinheit 41 zur zweiten Kolben-Zylindereinheit 42 erfolgen.

Auch ist zu erkennen, dass in der Fluidverbindungsleitung 49 ein steuerbares Ventil 50 angeordnet ist. Das steuerbare Ventil 50 dient dazu, den Fluidstrom in der Fluidverbindungsleitung 49 zu steuern. Damit kann die Steuerung des zweiten Aktuators 40 derart erfolgen, dass der Betätigungshebel 3 in seiner Verlagerbarkeit definiert sperrbar oder freigebbar ist, so dass eine fahrerseitige Betätigung des Betätigungshebels 3 unter Last sperrbar oder freigebbar ist.

Auch ist zu erkennen, dass ein Druckmittelreservoir 51 und/oder ein Druckmittelausgleichsbehälter angeordnet ist. Dies dient dazu, den Druck in der Fluidverbindungsleitung 49 aufrecht und auf einen vordefinierten Wert zu halten.

Die Steuerung des zweiten Aktuators 40 erfolgt derart, dass die Einwirkung des verlagerbaren Kolbens 47 der ersten Kolben-Zylindereinheit 41 und die Einwirkung des verlagerbaren Kolbens 48 der zweiten Kolben-Zylindereinheit 42 auf den Betätigungshebel 3 mittels eines steuerbaren Ventils 50 ansteuerbar ist.

Dabei ist das steuerbare Ventil 50 in der Fluidverbindungsleitung 49 zwischen der ersten Kolben-Zylindereinheit 41 und der zweiten Kolben-Zylindereinheit 42 angeordnet und es ist derart ansteuerbar, dass es einen Fluidstrom zwischen der ersten Kolben-Zylindereinheit 41 und der zweiten Kolben-Zylindereinheit 42 sperrt oder einen Fluidstrom von der ersten Kolben-Zylindereinheit 41 zu der zweiten Kolben-Zylindereinheit 42 zulässt, während es einen Fluidstrom von der zweiten Kolben-Zylindereinheit 42 zu der ersten Kolben-Zylindereinheit 41 sperrt oder einen Fluidstrom von der zweiten Kolben-Zylindereinheit 42 zu der ersten Kolben-Zylindereinheit 41 zulässt, während es einen Fluidstrom von der ersten Kolben-Zylindereinheit 41 zu der zweiten Kolben-Zylindereinheit 42 sperrt. Damit kann der Betätigungshebel 3 vollständig blockiert werden oder er kann nur in einer Betätigungsrichtung 8 oder in einer entgegengesetzten Betätigungsrichtung 8 bewegbar gesteuert werden.

Dabei ist der zweite Aktuator 40 bevorzugt derart ausgebildet, dass er die Betätigung des Betätigungshebels 3 in der transversalen ersten Betätigungsrichtung 8 beeinflusst.

Der zweite Aktuator 40 ist beispielhaft ein Hydraulikaktuator, welcher zwei Hydraulikzylinder/Kolbeneinheiten 41, 42 aufweist, die an der rotatorischbeweglichen Basis des Betätigungshebels 3 mit etwas Anpressdruck dauerhaft anliegen. Der dauerhafte leichte Anpressdruck wird erreicht, indem das Fluiddrucksystem, wie das Hydraulik-System ein Druckmittelreservoir 51 und/oder ein Druckmittelausgleichsbehälter aufweist, wie beispielsweise einen Gasdruck-Ausgleichsbehälter, der unter Überdruck steht.

Die Kolben-Zylindereinheiten 41, 42, wie die Hydraulikzylinder, sind so angeordnet, dass der eine Kolben 47, 48 der einen Kolben-Zylindereinheit 41, 42 ausfährt oder länger wird, während der andere Kolben 48, 47 der anderen Kolben-Zylindereinheit 42, 41 einfährt oder kürzer wird.

Das gezeigte Fluiddrucksystem des zweiten Aktuators 40 kann dabei auch ohne Pumpe auskommen, es wäre dabei passiv. Alternativ kann jedoch auch eine Pumpe vorgesehen sein.

Anstatt ein Ventil 50 mit drei Stellungen zu verwenden, sind auch andere Varianten denkbar. So können beispielsweise auch mehrere parallele hydraulische Fluidverbindungsleitungen 49 zwischen den Zylindern der Kolben-Zylindereinheiten 41, 42 mit je einem einfacheren Ventil 50 je Fluidverbindungsleitung 49 vorgesehen sein.

Das Ventil 50 verfügt im gezeigten Ausführungsbeispiel über zumindest drei Stellungen.

Die erste Stellung ist eine komplett offene Stellung des Ventils 50. In dieser Stellung ist die Fluidverbindungsleitung 49 nicht beeinflusst. In dieser Stellung kann Fluid sowohl von der ersten Kolben-Zylindereinheit 41 zur zweiten Kolben-Zylindereinheit 42 fließen als auch kann Fluid von der zweiten Kolben-Zylindereinheit 42 zur ersten Kolben-Zylindereinheit 41 fließen.

Auch könnte zusätzlich oder alternativ eine vollständige Sperrung des Ventils 50 in einer zusätzlichen vierten Stellung optional erfolgen. Dann wäre die Fluidverbindungsleitung 49 vollständig gesperrt.

In einer zweiten Stellung des Ventils 50 erfolgt eine Sperrung des Ventils 50 in der Durchflussrichtung von der ersten Kolben-Zylindereinheit 41 zur zweiten Kolben-Zylindereinheit 42, wobei die entgegengesetzte Durchflussrichtung des Ventils 50 von der zweiten Kolben-Zylindereinheit 42 zur ersten Kolben-Zylindereinheit 41 frei ist. Es kann also nur Fluid von der zweiten Kolben-Zylindereinheit 42 zur ersten Kolben-Zylindereinheit 41 strömen, aber nicht zurück.

In einer dritten Stellung des Ventils 50 erfolgt eine Sperrung des Ventils 50 in der Durchflussrichtung von der zweiten Kolben-Zylindereinheit 42 zur ersten Kolben-Zylindereinheit 41, wobei die entgegengesetzte Durchflussrichtung des Ventils 50 von der ersten Kolben-Zylindereinheit 41 zur zweiten Kolben-Zylindereinheit 42 frei ist. Es kann also nur Fluid von der ersten Kolben-Zylindereinheit 41 zur zweiten Kolben-Zylindereinheit 42 strömen, aber nicht zurück.

### Bezugszeichenliste

- 1: Handbetätigungsaktuator
- 2: Aktuatorgehäuse
- 3: Betätigungshebel
- 4: erster Hebelarmbereich
- 5: zweiter Hebelarmbereich
- 6: Lager
- 7: zweite Betätigungsrichtung
- 8: erste Betätigungsrichtung
- 9: Federanordnung
- 10: erster Aktuator
- 12: Magnetspule
- 13: Federelement
- 14: Endanschläge
- 15: Sensor
- 20: Stromregelkreis
- 30: Steuereinheit
- 35: Kupplungspedal
- 36: Sensor
- 40: zweiter Aktuator
- 41: erste Kolben-Zylindereinheit
- 42: zweite Kolben-Zylindereinheit
- 43: erste Kraft
- 44: zweite Kraft
- 45: erstes Hebelelement
- 46: zweites Hebelelement
- 47: Kolben
- 48: Kolben
- 49: Fluidverbindungsleitung
- 50: Ventil
- 51: Druckmittelreservoir

## Patentansprüche

1. Handbetätigungsaktuator (1), insbesondere für die emulierte Betätigung eines Getriebes, insbesondere eines Kraftfahrzeugs, mit einem Aktuatorgehäuse (2) und mit einem Betätigungshebel (3), wobei der Betätigungshebel (3) in dem Aktuatorgehäuse (2) entlang zumindest eines Betätigungswegs verschwenkbar gelagert angeordnet ist, wobei zumindest ein steuerbarer erster Aktuator (10) vorgesehen ist, welcher eine Kraftwirkung auf den Betätigungshebel (3) ausübt, um die auf den Betätigungshebel (3) wirkenden Widerstandskräfte bei der Betätigung des Betätigungshebels (3) zu beeinflussen, um die Betätigungshaptik des Betätigungshebels (3) zu beeinflussen, wobei zumindest ein steuerbarer zweiter Aktuator (40) vorgesehen ist, welcher eine Kraftwirkung auf den Betätigungshebel (3) ausübt, um die auf den Betätigungshebel (3) wirkenden Widerstandskräfte bei der Betätigung des Betätigungshebels (3) zu beeinflussen, um die Betätigungshaptik des Betätigungshebels (3) zu beeinflussen, wobei der zweite Aktuator (40) von einem anderen Typ ist als der erste Aktuator (10).

2. Handbetätigungsaktuator (1) nach Anspruch 1, **dadurch gekennzeichnet, dass** der zumindest eine erste Aktuator (10) ein magnetorheologischer Aktuator (10) ist, wobei zumindest eine Magnetspule (12) oder ein Elektromagnet vorgesehen ist, um ein Magnetfeld zu erzeugen, welches auf den magnetorheologischen Aktuator (10) einwirkt und/oder dass der zumindest eine erste Aktuator (10) ein elektromotorischer Aktuator (10) ist.

3. Handbetätigungsaktuator (1) nach Anspruch 1 oder 2, **dadurch gekennzeichnet, dass** der zumindest eine zweite Aktuator (40) ein druckmittelbetätigbarer Aktuator (40) ist und/oder dass der zweite Aktuator (40) einen Hubmagneten aufweist, insbesondere einen Hubmagneten der mit dem Betätigungshebel (3) koppelbar ist und/oder dass der zweite Aktuator (40) eine Magnetspule aufweist, insbesondere eine Magnetspule, mittels der der zumindest eine zweite Aktuator (40) im aktivierten Zustand eine magnetische Kraft auf den Betätigungshebel ausüben kann.

4. Handbetätigungsaktuator (1) nach Anspruch 1 oder 2, **dadurch gekennzeichnet, dass** der druckmittelbetätigbare Aktuator (40) eine erste Kolben-Zylindereinheit (41) aufweist, die eine erste Kraft (43) auf den Betätigungshebel (3) ausübt und eine zweite Kolben-Zylindereinheit (42) aufweist, die eine zweite Kraft (44) auf den Betätigungshebel (3) ausübt, wobei die zweite Kraft (44) der ersten Kraft (43) entgegenwirkt.

5. Handbetätigungsaktuator (1) nach Anspruch 4, **dadurch gekennzeichnet, dass** der Betätigungshebel (3) ein erstes Hebelelement (45) aufweist, an welchem der verlagerbare Kolben (47) der ersten Kolben-Zylindereinheit (41) angreift und der Betätigungshebel (3) ein zweites Hebelelement (46) aufweist, an welchem der verlagerbare Kolben (48) der zweiten Kolben-Zylindereinheit (42) angreift.

6. Handbetätigungsaktuator (1) nach Anspruch 4 oder 5, **dadurch gekennzeichnet, dass** die erste Kolben-Zylindereinheit (41) mit der zweiten Kolben-Zylindereinheit (42) mittels einer Fluidverbindungsleitung (49) fluidverbunden ist, wobei in der Fluidverbindungsleitung (49) ein steuerbares Ventil (50) und/oder ein Druckmittelreservoir (51) und/oder ein Druckmittelausgleichsbehälter angeordnet ist.

7. Verfahren zur Steuerung eines Handbetätigungsaktuators (1), insbesondere für die emulierte Betätigung eines Getriebes, insbesondere eines Kraftfahrzeugs, mit einem Aktuatorgehäuse (2) und mit einem Betätigungshebel (3), wobei der Betätigungshebel (3) in dem Aktuatorgehäuse (2) entlang zumindest eines Betätigungswegs verschwenkbar gelagert angeordnet ist, wobei zumindest ein steuerbarer erster Aktuator (10) vorgesehen ist, welcher eine Kraftwirkung auf den Betätigungshebel (3) ausübt, um die auf den Betätigungshebel (3) wirkenden Widerstandskräfte bei der Betätigung des Betätigungshebels (3) zu beeinflussen, um die Betätigungshaptik des Betätigungshebels (3) zu beeinflussen, wobei zumindest ein steuerbarer zweiter Aktuator (40) vorgesehen ist, welcher eine Kraftwirkung auf den Betätigungshebel (3) ausübt, um die auf den Betätigungshebel (3) wirkenden Widerstandskräfte bei der Betätigung des Betätigungshebels (3) zu beeinflussen, um die Betätigungshaptik des Betätigungshebels (3) zu beeinflussen, wobei der zweite Aktuator (40) von einem anderen Typ ist als der erste Aktuator (10).

8. Verfahren nach Anspruch 7, **dadurch gekennzeichnet, dass** der zumindest eine zweite Aktuator (40) ein druckmittelbetätigbarer Aktuator (40) ist, welcher eine erste Kolben-Zylindereinheit (41) aufweist, die eine erste Kraft (43) auf den Betätigungshebel (3) ausübt und eine zweite Kolben-Zylindereinheit (42) aufweist, die eine zweite Kraft (44) auf den Betätigungshebel (3) ausübt, wobei die zweite Kraft (44) der ersten Kraft (43) entgegenwirkt, wobei der Betätigungshebel (3) ein erstes Hebelelement (45) aufweist, an welchem der verlagerbare Kolben (47) der ersten Kolben-Zylindereinheit (41) angreift und der Betätigungshebel (3) ein zweites Hebelelement (46) aufweist, an welchem der verlagerbare Kolben (48) der zweiten Kolben-Zylindereinheit (42) angreift, wobei die Steuerung des zweiten Aktuators (40) derart erfolgt, dass der Betätigungshebel (3) in seiner Verlagerbarkeit definiert sperrbar oder freigebbar ist, so dass eine fahrerseitige Betätigung des Betätigungshebels (3) unter Last sperrbar oder freigebbar ist.

9. Verfahren nach einem der vorhergehenden Ansprüche, **dadurch gekennzeichnet, dass** die Einwirkung des verlagerbaren Kolbens (47) der ersten Kolben-Zylindereinheit (41) und die Einwirkung des verlagerbaren Kolbens (48) der zweiten Kolben-Zylindereinheit (42) auf den Betätigungshebel (3) mittels eines steuerbaren Ventils (50) ansteuerbar ist.

10. Verfahren nach Anspruch 9, **dadurch gekennzeichnet, dass** das steuerbare Ventil (50) in der Fluidverbindungsleitung (49) zwischen der ersten Kolben-Zylindereinheit (41) und der zweiten Kolben-Zylindereinheit (42) angeordnet ist und derart ansteuerbar ist, dass es einen Fluidstrom zwischen der ersten Kolben-Zylindereinheit (41) und der zweiten Kolben-Zylindereinheit (42) sperrt oder einen Fluidstrom von der ersten Kolben-Zylindereinheit (41) zu der zweiten Kolben-Zylindereinheit (42) zulässt oder einen Fluidstrom von der zweiten Kolben-Zylindereinheit (42) zu der ersten Kolben-Zylindereinheit (41) zulässt.
